# EUROPÄISCHE PATENTSCHRIFT

(11) **EP 1 809 447 B1**
(45) Veröffentlichungstag und Bekanntmachung des Hinweises auf die Patenterteilung: **12.05.2010**
(21) Anmeldenummer: 05790667.9
(22) Anmeldetag: 04.10.2005
(51) Int. Cl.: B25J 17/02, B25J 9/04, B25J 18/00

(54) **HUBROBOTER MIT PARALLELKINEMATISCHER VORRICHTUNG**
LIFTING ROBOT WITH PARALLEL KINEMATIC DEVICE
ROBOT DE LEVAGE AVEC DISPOSITIF À CINÉMATIQUE PARALLÈLE

(30) Priorität: 11.10.2004 AT 16942004; 11.10.2004 AT 16952004; 12.10.2004 AT 17022004; 26.04.2005 AT 7012005; 19.05.2005 AT 8612005
(43) Veröffentlichungstag der Anmeldung: 25.07.2007
(60) Teilanmeldung: 08021061.0
(73) Patentinhaber: Ehrenleitner, Franz, 72213 Altensteig-Walddorf (DE)
(72) Erfinder: Ehrenleitner, Franz, 72213 Altensteig-Walddorf (DE)
(74) Vertreter: Patentanwälte Barger, Piso & Partner
(86) Internationale Anmeldenummer: PCT/AT2005/000393
(87) Internationale Veröffentlichungsnummer: WO 2006/039730

(56) Entgegenhaltungen:
- EP-A- 0 112 099
- EP-A- 0 960 982
- WO-A-2004/076132
- DE-A1- 10 103 837
- DE-B- 1 035 878
- US-A- 3 220 585
- US-A- 3 628 771
- US-A- 4 273 242
- US-A- 4 396 344
- US-A- 5 617 964
- THOMAS F ET AL: "Coordinate-free formulation of a 3-2-1 wire-based tracking device using Cayley-Menger determinants" PROCEEDINGS OF THE 2003 IEEE INTERNATIONAL CONFERENCE ON ROBOTICS AND AUTOMATION. ICRA 2003. TAIPEI, TAWAN, SEPT. 14 - 19, 2003, PROCEEDINGS OF THE IEEE INTERNATIONAL CONFERENCE ON ROBOTICS AND AUTOMATION, NEW YORK, NY : IEEE, US, Bd. VOL. 1 OF 3, 14. September 2003 (2003-09-14), Seiten 355-361, XP010666723 ISBN: 0-7803-7736-2 in der Anmeldung erwähnt
- H.BRUYNINCKX: "Closed-Form Forward Position Kinematics for a (3-1-1-1) Fully Parallel Manipulator" IEEE TRANSACTIONS ON ROBOTICS AND AUTOMATION, Bd. 14, Nr. 2, April 1998 (1998-04), Seiten 326-328, XP002358805
- BRUYNINCKX H: "The 321-HEXA: a fully-parallel manipulator with closed-form position and velocity kinematics" ROBOTICS AND AUTOMATION, 1997. PROCEEDINGS., 1997 IEEE INTERNATIONAL CONFERENCE ON ALBUQUERQUE, NM, USA 20-25 APRIL 1997, NEW YORK, NY, USA,IEEE, US, Bd. 3, 20. April 1997 (1997-04-20), Seiten 2657-2662, XP010235946 ISBN: 0-7803-3612-7
- PATENT ABSTRACTS OF JAPAN Bd. 1999, Nr. 01, 29. Januar 1999 (1999-01-29) -& JP 10 277974 A (NISHIMURA EIZOU), 20. Oktober 1998 (1998-10-20)
- PATENT ABSTRACTS OF JAPAN Bd. 2003, Nr. 10, 8. Oktober 2003 (2003-10-08) -& JP 2003 172418 A (KONDO KOJI), 20. Juni 2003 (2003-06-20)

## Beschreibung

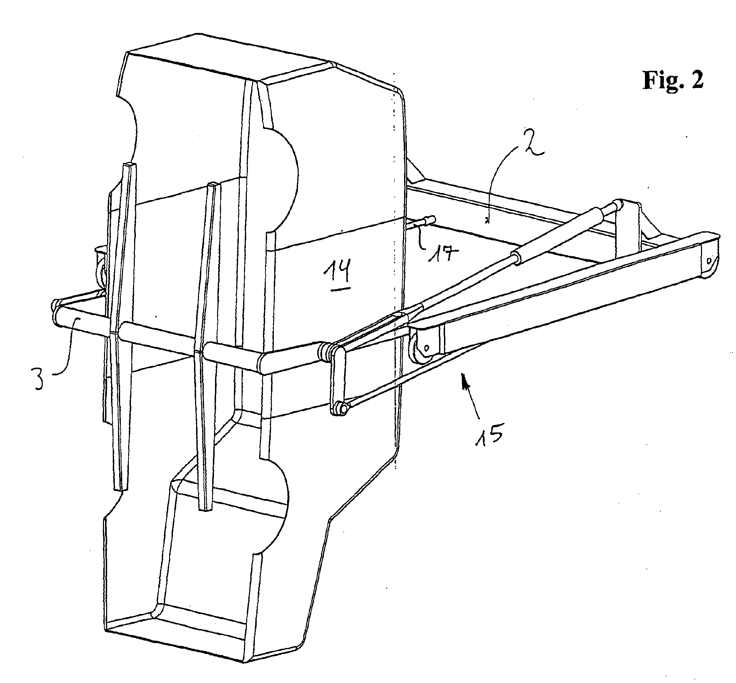

Die Erfindung betrifft einen Hubroboter auf der Basis einer parallelkinematischen Vorrichtung entsprechend dem Oberbegriff des Anspruches 1. Ein solcher Hubroboter ist auf Figur 2 des Dokumentes "Closed-Form Forward Position Kinematics for a (3-1-1-1)² Fully Parallel Manipulator", von H.Brunymincksc, IEEE Transactions on Robotics and Automation, Band 14, Nr.2, April 1998, schematisch dargestellt. Ferner ist ein Hubroboter in Form einer "klassischen" Parallelkinematik beispielsweise aus der US5, 617,964 bekannt. Bei der Vorrichtung gemäß dieser Druckschrift ist sichergestellt, dass in allen Aktuatoren der Kinematik stets nur Zugkräfte auftreten können, sodass die Verwendung vorgespannter Lager etc. nicht notwendig ist. Trotz dieser Vorkehrung sind sechs Aktuatoren vorgesehen, es wird also auf die "Benutzung" der Schwerkraft als Ersatz für einen Aktuator verzichtet, was bei der gewählten Anordnung der Aktuatoren großen Rechenaufwand mit sich bringt.

Die DE 102 57 108 A, die auf den Anmelder zurückgeht, betrifft eine Laufkatze mit einem Traggestell für eine Autokarosserie od.dergl., wobei die Verbindung zwischen der Laufkatze und dem Traggestell über zwei zick-zack-förmig angeordnete Rahmen erfolgt, die um zwei horizontale, zueinander parallele Achsen verschwenkbar sind. Mittels Seilen wird einerseits die Lage der unteren Achse zur Laufkatze und andererseits die Lage des Traggestelles bezüglich dieser Achse festgelegt. Wenn man diese Anordnung als Parallelkinematik mit zwei Freiheitsgraden interpretiert, so stellt sie ein höchst interessantes Zwitterwesen aus Seilkinematik und rotatorischer Parallelkinematik dar, hat aber keinerlei Zusammenhang mit einer Parallelkinematik mit längenveränderlichen Aktuatoren.

Die EP 1 106 563 A, zwischenzeitlich erteilt und in einem Einspruchsverfahren verfangen, offenbart eine Seilkinematik mit zumindest einem schräg zu den vertikalen Halteseilen verlaufenden Stabilisierungsseil. Die Anlenkpunkte der Seile sind dabei nach konstruktiven Gesichtspunkten: Platzbedarf der Rollen, Haspeln und Motoren, etc. ausgewählt und nicht nach kinematischen Prinzipien.

Die DE 101 00 377 A, die ebenfalls auf den Anmelder zurückgeht, betrifft einen Tauchroboter für Lackieranlagen von Fahrzeugkarosserien. Dieser Tauchroboter ist in Form eines Gelenkviereckes ausgebildet, wobei am Wagen die Basis und am zu lackierenden Fahrzeug die Koppel ausgebildet ist, die beiden Kurbeln haben gleiche Länge, sodass es möglich ist, das Gelenkviereck nach Art eines Gelenkparallelogramms zu bewegen. Dazu kommt noch, dass an einer der beiden Kurbeln, geoffenbart ist dies für die in Fahrtrichtung gesehen hinten liegende Kurbel, das Ende seinerseits frei gegenüber dem Rest der Kurbel drehbar ist, wodurch verschiedene Schrägstellungen der Karosserie ermöglicht werden. In Kombination mit der Betätigung der hinteren Kurbel lassen sich eine ganze Reihe von Bewegungen ausführen, wobei aber alle diese Bewegungen ausschließlich die sogenannte Ebene Kinematik betreffen.

Wollte man diese Vorrichtung als Parallelkinematik ansprechen, so wäre es eine rein rotative Parallelkinematik, dazu kommt noch, dass durch die Unterteilung der hinteren Kurbel zwangsläufig eine serielle Kinematik vorliegt.

Die DE 101 03 837 A, die ebenfalls auf den Anmelder zurückgeht, betrifft, wie die vorstehend genannte Druckschrift, eine Lackiervorrichtung für Fahrzeugkarosserien und eine ausschließlich Ebene Kinematik. Als Besonderheit, die tatsächlich als eine Art Parallelkinematik angesehen werden kann, ist die Art der Verschwenkbarkeit des Fahrzeugschwerpunktes um den Transportwagen in Verbindung mit der Drehung des Fahrzeuges um eine Querachse anzusehen.

Diese Drehungen erfolgen einerseits durch eine Kurbel und andererseits durch ein Gelenkparallelogramm, das die Drehung der Karosserie um das Ende der Kurbel, an dem sie befestigt ist, bewirkt. Es kann somit diese Kinematik als eine Art rotative Parallelkinematik angesehen werden, doch gelangt man bei einer solchen Betrachtungsweise sehr schnell auf große begriffliche Schwierigkeiten, wenn man berücksichtigt, dass es aus folgenden Gründen keine feste Plattform gibt: Die Enden des Parallelogramms, die sich auf der Seite des Transportwagens befinden und eigentlich die feste Plattform bilden sollten, bewegen sich ja bezüglich der tatsächlich festen Plattform, die durch den Fußpunkt des Schwenkarmes gebildet ist, ebenfalls. Es liegt also auch hier ein serieller kinematischer Abschnitt im Bereich einer teilweisen parallelen Kinematik vor.

Ausgehend von diesem Stand der Technik ist es Ziel der Erfindung, eine Parallelkinematik für Hubroboter zu schaffen, die auf der Kombination von Aktuatoren (durch Fusspunktverschiebung wirkende Stäbe konstanter Länge oder längenveränderliche Stäbe, gegebenenfalls auch längenveränderliche Seile oder andere Zugmittel) und passiven Stäben beruht, wobei insbesondere die Probleme der komplexen Steuerung und der Lagerung vermieden oder zumindest deutlich reduziert werden sollen.

Erfindungsgemäß geschieht dies durch einen Hubroboter mit den Merkmalen des Anspruches 1.

Durch die Ausführungen b)-e) wird zwar in zumindest einem Stab ein Biegemoment induziert, doch vereinfacht sich die praktische Ausführung des Lagers und es werden dessen mögliche Schwenkwinkel deutlich erhöht, ohne der Vereinfachung der Rechenarbeit oder der Grundlage der Erfindung, nämlich der Definition der linearen Freiheitsgrade, Abbruch zu tun. Bei Tripelpunkten kann je nach Bewegung des passend definierten Kraftecks entweder ein echter Doppelpunkt in Kombination mit einem Angriffspunkt des dritten Stabes in der Nähe des Doppelpunktes oder ein einfacher Angriffspunkt mit zwei in dessen Nähe am ersten Stab angreifenden Stäben ausgebildet sein. In Sonderfällen können auch zwei oder alle drei Stäbe in nächster Nähe an der beweglichen Plattform angreifen (Ausführung a)), dann kann zwar auf eine iterative Rechnung nicht gänzlich verzichtet werden, aber diese betrifft nur kleine Winkel/Wege und ist um Größenordnungen einfacher und schneller als im Stand der Technik; die Ausführung f) schließlich entspricht dem "echten" Tripelpunkt.

Wenn diese mittelbare Ausführung bei Tripelpunkten im Bereich der festen Plattform verwendet wird, so gehen die mathematischen Vorteile teilweise verloren, da die Lage des Fußpunktes des so angebundenen Stabes sich mit der Lage des Stabes, an dem er angelenkt ist, ändert. Die mechanischen Vorteile, insbesondere das Lager betreffend, bleiben aber voll erhalten. Es kann gegebenenfalls nach der geschlossenen Lösung für den Tripelpunkt eine iterative Berechnung der exakten Endlage erfolgen, doch betrifft dies ausschließlich kurze Wege und ist daher auch iterativ ohne großen Aufwand und jedenfalls ohne die oben genannten Probleme möglich. Aus mechanischen Gründen ist es bevorzugt, dass der auf Biegung belastete Stab derjenige sein sollte, der nach Analyse des zugrunde liegenden Problems sich als der am geringsten belastete der gesamten kinematischen Vorrichtung, oft einfach "Kinematik" genannt, herausstellt.

Eine vorteilhafte Weiterbildung der Erfindung besteht darin, eine sogenannte überdefinierte bzw. überbestimmte Kinematik zu verwenden. Damit erreicht man eine Erhöhung der Steifigkeit der Vorrichtung, kann die bewegliche Plattform, was oft günstig ist, leichter und damit weniger steif bauen, weil sie durch die überbestimmte Fixierung stabilisiert wird und weil dies, zumindest in einem gewissem Ausmaß, notwendig ist, um die Toleranzen der überbestimmten Führung auszugleichen und so Beschädigungen der Lager bzw. der Aktuatoren (Antriebe, Getriebe und ausführende Organe in ihrer Gesamtheit) zu verhindern.

Eine weitere vorteilhafte Variante der Erfindung, die mit der vorstehend genannten nicht in Widerspruch steht, besteht darin, durch Lager für einzelne Stäbe, die keine allseitige Bewegung zulassen (Kardangelenk statt sphärischer Lagerung), Stäbe "einzusparen" und dafür Biegebeanspruchungen in Kauf zu nehmen. Diese zusätzliche mechanische Beanspruchung ist bei vielen Anwendungsgebieten, bei denen keine großen Kräfte auftreten, z.B. bei der Führung eines Laserkopfes zum Schneiden von Material, leicht zu beherrschen und reduziert den Aufwand und Platzbedarf nochmals.

Eine weitere Ausgestaltung der Erfindung besteht darin, nach der Festlegung der drei in einem Tripelpunkt zusammenlaufenden Stäbe die anderen drei notwendigen Stäbe gemäß den speziellen Systemanforderungen anzuordnen und auszuwählen. Besonders günstig ist es hier, ein weiteres Zeigerpaar bzw. Krafteck (zwei Stäbe, die in einem Punkt angreifen) : und einen Einzelstab vorzusehen. Damit reduziert sich der für die Steuerung der Bewegung notwendige mathematische Aufwand nochmals dramatisch und in mechanischer Hinsicht erlaubt eine solche Anordnung den Einsatz von Gleichlaufelementen, Führungen etc..

In der folgenden Beschreibung und den Ansprüchen wird zur besseren Lesbarkeit immer von einem" Tripelpunkt" gesprochen, es sei denn, es wird speziell die nahe des Punktes angreifenden Variante, der sogenannte "Pseudo-Tripelpunkt" erläutert oder wenn die Unterschiede zwischen Tripelpunkt und Pseudo-Tripelpunkt eine erwähnenswerte Rolle spielen.

In einer Anzahl von Fällen können einzelne oder mehrere Stäbe und/oder Aktuatoren durch Zugmittel wie Seile, Ketten, Bänder, etc. ersetzt werden, dies ändert nichts an der Erfindung an sich. Es spielt auch in zahlreichen Anwendungsfällen keine Rolle, ob einzelne oder mehrere Aktuatoren als längenveränderliche Stäbe oder als Stäbe konstanter Länge, aber mit Fußpunktverschiebung (seltener Kopfpunktverschiebung, wegen des steigenden mathematischen Aufwandes) verwendet werden. Der Fachmann auf dem Gebiet der Parallelkinematik kann in Kenntnis der Erfindung die entsprechende Auswahl leicht vornehmen, in der Beschreibung und den Ansprüchen wird daher nicht näher darauf eingegangen.

Die Erfindung wird im folgenden anhand der Zeichnung näher erläutert. Dabei zeigt bzw. zeigen:
die Fig. 1-6 eine erste Variante eines Hubroboters,
die Fig. 7-10 eine zweite Variante eines Hubroboters,

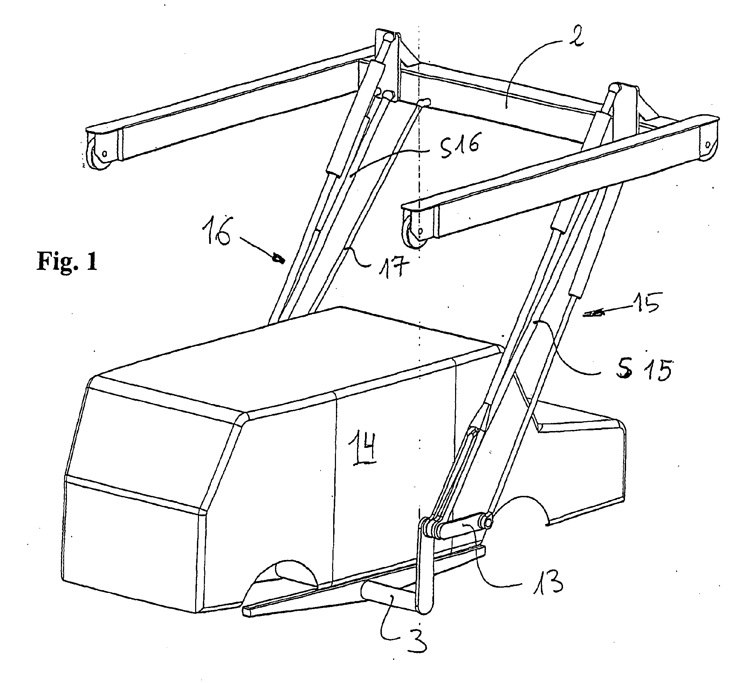

Die Fig. 1-6 zeigen einen fahrbaren Hubroboter, wie er beispielsweise beim Lackieren oder Verzinken oder bei sonstigen Oberflächenbehandlungen großformatiger und entsprechend massereicher Gegenstände, insbesondere von Fahrzeugkarosserien, verwendet wird. Derartige Vorrichtungen sind, wie bereits in der Beschreibungseinleitung erwähnt, beispielsweise aus der DE 101 00 377 A, der DE 101 03 837 A und der DE 102 57 108 A bekannt. Die dort geoffenbarten Vorrichtungen bedienen sich serieller Kinematik bzw. einer Schanvermechanik und weisen die eingangs genannten Nachteile auf.

Zu den Hubrobotern, die hier in der Folge besprochen und näher erläutert werden sollen, ist vorab noch Folgendes auszuführen:

Beim Eintauchen und beim Abtropfen komplexer Gebilde bestehen immer wieder Probleme, die dadurch bedingt sind, dass Luftblasen beim Eintauchvorgang mitgeschleppt werden, die bei der Bewegung mittels einer herkömmlicher Kinematik mehr oder weniger statisch an der Oberfläche des Gegenstandes anliegen und so zu Fehlern in der Beschichtung führen. Es ist im Stand der Technik bekannt, den zu behandelnden Gegenstand während des Beschichtungsprozesses um eine Achse zu verschwenken, was aber nur in einem sehr kleinen Winkelbereich möglich ist, da es ansonsten zum Auftauchen bzw. Austauchen des Gegenstandes kommt. Man kann so zwar eine lückenlose Beschichtung erreichen, doch kann man nicht verhindern, dass diese Beschichtung im Bereich der Luftblasen stark unterschiedlich ist im Vergleich zu den Gebieten, in denen keine Luftblasen auftreten. Genau genommen handelt es sich bei dem entstehenden Unterschied um eine Funktion der Einwirkzeit, der verwendeten Stromstärke, der Kippwinkel, der Größe der Luftblasen und, besonders komplex, der Form der Oberfläche in dem Bereich, in dem Luftblasen mitgeschleppt werden.

Gleichermaßen ist es für das möglichst vollständige Abtropfen der Gegenstände zwischen zwei aufeinander folgenden Tauchbecken wichtig, dass nirgendwo Flüssigkeit in Form von Lacken in Vertiefungen oder in Sacklöchern verbleibt. Dies ist nicht nur wegen der Qualität der Beschichtungen wichtig, sondern auch deshalb, weil durch das Mitschleppen der Chemikalien von einem Tauchbecken zum anderen unangenehme und oft für die Qualität der gesamten Beschichtung nachteilige Mischungen sowohl in den Tauchbecken als auch im Bereich der mitgeschleppten Flüssigkeit an der zu behandelnden Oberfläche entstehen, die darüber hinaus die Entsorgung der Bäder erschweren und so die Umwelt beeinträchtigen.

Diese Probleme kann man durch das Vorsehen einer zweiten Kippachse eliminieren oder zumindest stark verringern, doch war es mit der seriellen Kinematik gemäß dem Stand der Technik nicht auf vertretbare Weise möglich, eine zweite Kippachse vorzusehen.

Die Fig. 1-6 zeigen nun eine Ausführungsform einer erfindungsgemäßen parallelen Kinematik, die diese Ziele erreicht und somit die genannten Nachteile vermeidet:

Die Fig. 1 zeigt eine auf Rollen verfahrbare feste Plattform 2 und eine mittels der erfindungsgemäßen Kinematik mit dieser festen Plattform 2 verbundene bewegliche Plattform 3, die als Objektträger dient und im gezeigten Ausführungsbeispiel mit einer Karosserie 14, die rein schematisch angedeutet ist, verbunden ist.

Die Verbindung zwischen der festen Plattform 2 und der beweglichen Plattform 3 erfolgt über zwei Gelenkvierecke 15, 16 und eine sogenannte Querstange 17. Den Gelenkvierecken 15, 16, die jeweils aus Aktuatoren gebildet sind, ist eine diagonal verlaufende passive Stange S15, S16 zugeordnet, durch die das Gelenkviereck in zwei Dreiecke, sogenannte Zeigerpaare bzw. Kraftecke, zerlegt wird, mit der Maßgabe, dass jeder passive Stab S15, S16 zwei Zeigerpaaren zugehörig ist.

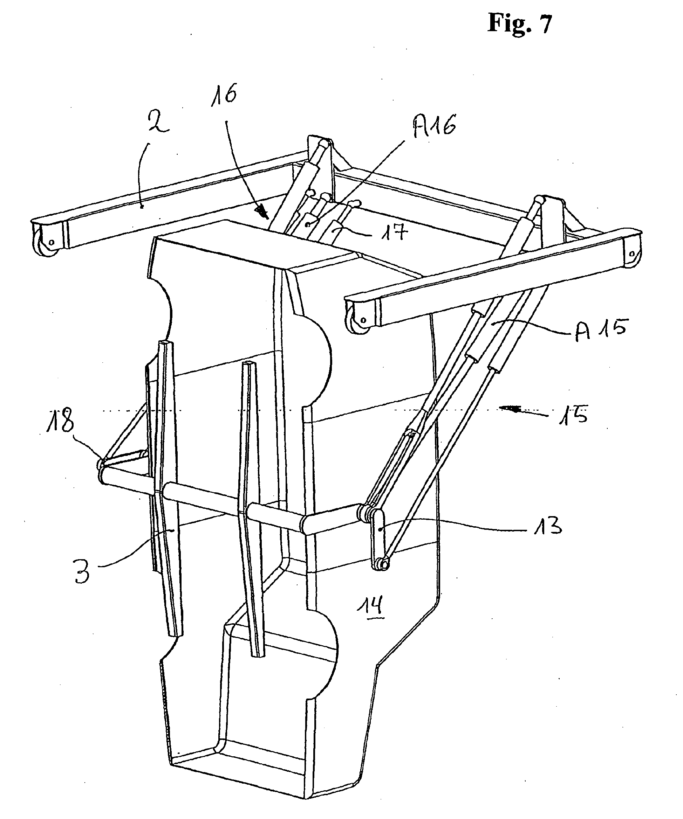

Die Gelenkvierecke müssen nicht im mathematischen Sinn in einer Ebene liegen, es können die Fußpunkte bzw. Kopfpunkte der beteiligten Stäbe auch knapp versetzt zueinander liegen, doch ist es wesentlich, dass im technischen Sinn und im Vergleich zur Größe der Zeigerpaare die "Dicke" eines solchen Gelenkviereckes klein ist gegenüber der Länge seiner Stäbe. Dies gilt nicht nur für dieses Ausführungsbeispiel sondern für die praktische Umsetzung der Erfindung ganz allgemein. Es ist weiters zu bedenken, dass bei Schrägstellungen zwischen den Plattformen 2, 3 (Fig. 7) von Stäben gebildete "Ebenen" im mathematischen Sinn überhaupt nicht mehr vorliegen.

Die bewegliche Plattform 3 hat im dargestellten Beispiel die Besonderheit, dass die Gelenkvierecke 15, 16 an Stellen mit unterschiedlicher Winkellage an der beweglichen Plattform 3 angreifen. Dies bedeutet, dass der in Fig. 1 sichtbare Hebel 13 der beweglichen Plattform 3 zu seinem hinter der Karosserie befindlichen und daher nicht sichtbaren Pendant nicht parallel verläuft, sondern einen Winkel, bevorzugt von größer als 45° (in der Projektion) einschließt. Dadurch wird es möglich, die bewegliche Plattform 3 und damit die darauf befestigte Karosserie 14 "durchzudrehen", soferne nur die Enden der Karosserie 14 nicht am Querbalken der festen Plattform 2 oder der Wanne, der Decke der Halle, etc. anstoßen.

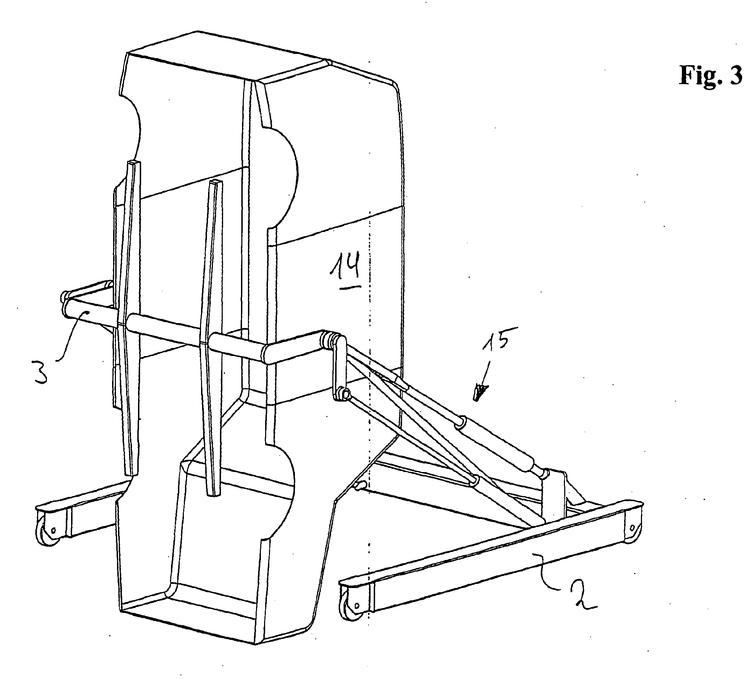

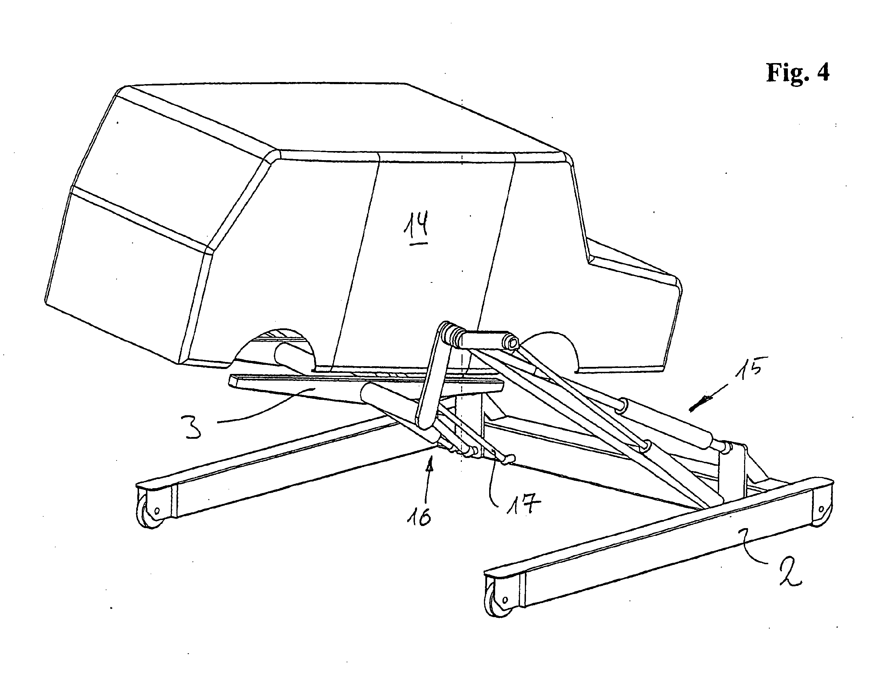

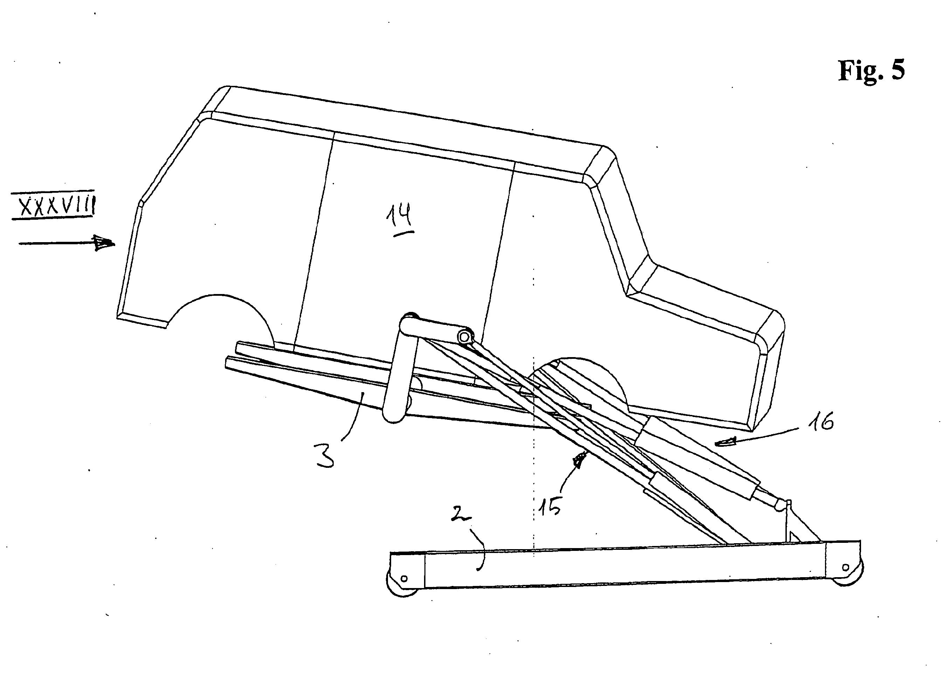

Die Fig. 2 zeigt die Situation mit angehobener und um ca. 90° um die Querachse gedrehter beweglicher Plattform 3, die Fig. 3 zeigt das weitere Anheben der Plattform 3 mit unveränderter Winkellage über die feste Plattform 2 hinaus, die Fig. 4 das Zurückdrehen der beweglichen Plattform 3 und die Fig. 5, in einer Seitenansicht bezüglich der festen Plattform 2, die Möglichkeit des Schrägstellens der beweglichen Plattform 3 und der darauf montierten Karosserie 14. In dieser Darstellung ist trotz der verschiedenen Überschneidungen deutlich zu erkennen, dass die Gelenkvierecke 15, 16 nicht kongruent zueinander liegen, sondern leicht unterschiedliche Winkel zur Zeichenebene aufweisen, dadurch wird, weil ja die quer verlaufenden Elemente der beweglichen Plattform 3 nun schräg stehen, auch die Lage der Gelenkvierecke aus ihrer parallelen Lage zueinander leicht geändert. In der gesamten Beschreibung wird aber, wo es auf diese Änderungen nicht gerade ankommt, diese geringfügige Abweichung nicht gesondert beschrieben und erwähnt, um die Lesbarkeit nicht zu beeinträchtigen.

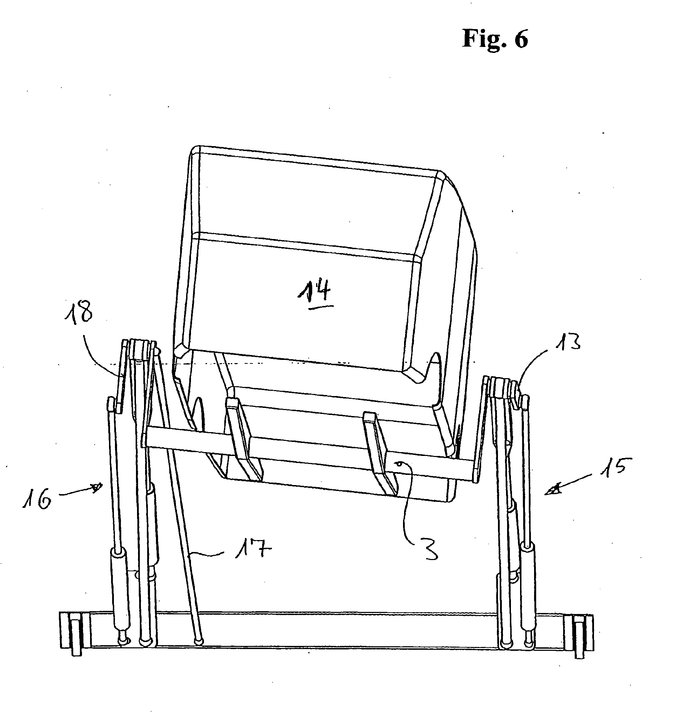

Die Fig. 6, die eine Ansicht der Position gemäß Fig. 5 etwa in Richtung des Pfeils VI zeigt, demonstriert deutlich die unterschiedliche Winkellage der Abschnitte 13, 18 der beweglichen Plattform 3 zueinander und deren Schrägstellung bezüglich der festen Plattform 2. Durch diese unterschiedliche Winkellage (im Raum gesehen "windschief") werden Totpunkte und Singularitäten vermieden und es ist möglich, die Plattform 3 um die plattformseitigen Enden der Winkel 13, 18 in beliebiger Richtung und beliebig oft durchzudrehen, solange nur der mit der Plattform 3 verbundene Gegenstand nicht an der Plattform 2 (oder den einzelnen Stäben) oder der Umgebung anschlägt. In dieser Darstellung ist auch gut ersichtlich, dass die Gelenkvierecke 15, 16 nicht im mathematischen Sinn in einer Ebene liegen, sondern dass die Fußpunkte der Stäbe auf der festen Plattform 2 zueinander versetzt angeordnet sind, und darüber hinaus durch die Schrägstellung der beweglichen Plattform 3 bezüglich der festen Plattform 3 überhaupt leicht windschief zueinander verlaufen. In der Beschreibung und den Ansprüchen ist dies aus Gründen der leichteren Lesbarkeit nicht explizit angeführt, muss jedoch so verstanden werden.

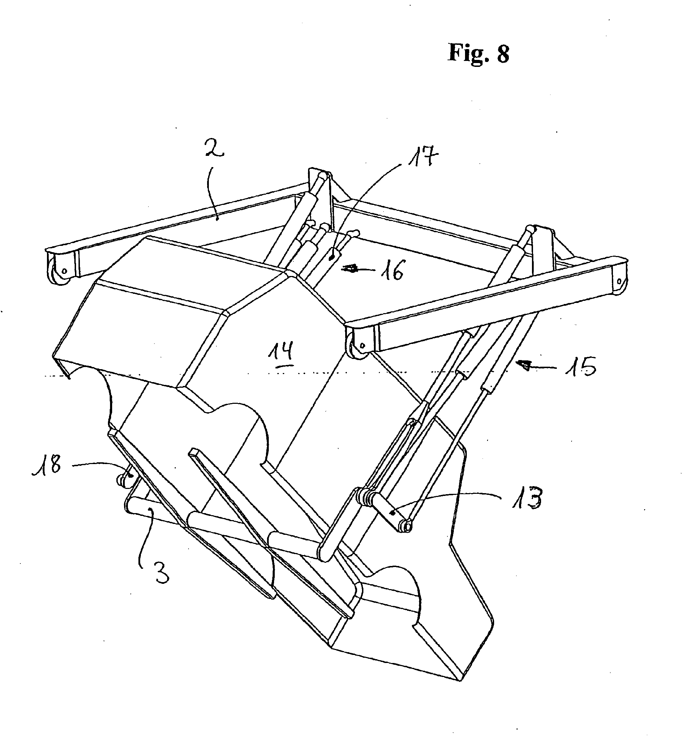

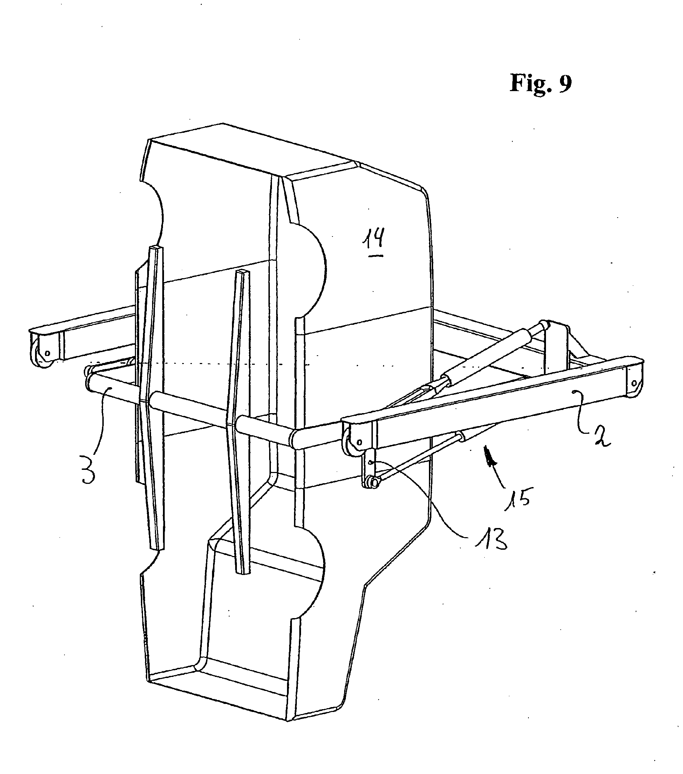

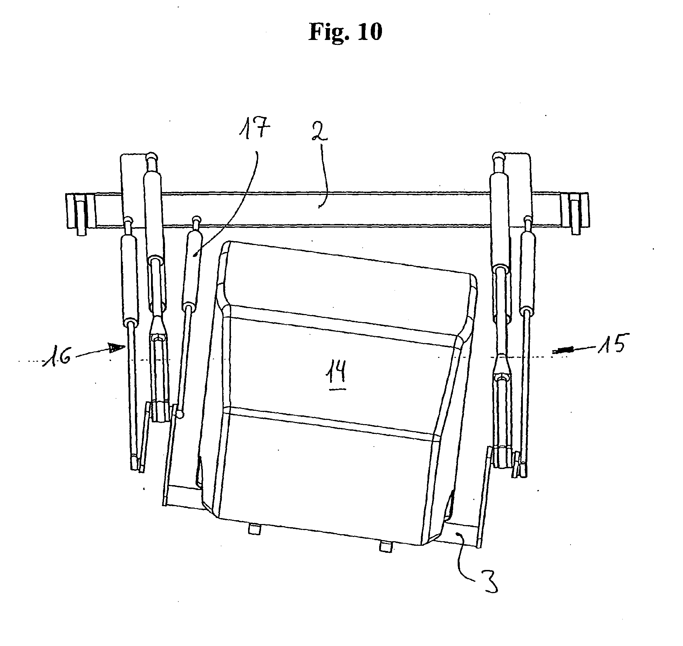

Die Fig. 7-10 zeigen eine weiter flexible Variante, bei der auch die im vorigen Beispiel innerhalb der Gelenkvierecke diagonal verlaufende, passive Stäbe als Aktuatoren A15 bzw. A16 ausgebildet sind und so weitere Freiheitsgrade, insgesamt nunmehr alle sechs, und, mit dem allerdings nicht zur Erfindung gehörenden Verfahren der festen Plattform 2 entlang ihrer Laufbahn, sogar sieben Freiheitsgrade zugänglich werden.

Der große Vorteil dieser Ausbildungsform, die auf den ersten Blick nicht viel zu bringen scheint, liegt darin, dass die Tauch-, Kipp- und Drehmanöver der beweglichen Plattform 3 und damit der Karosserie 14 wie aus der Abfolge der Figuren ersichtlich ist, auf wesentlich kürzerem Weg durchgeführt werden können als bei der ersten dargestellten Ausführungsform gemäß den Fig. 1-6, und dass dadurch die Gefahr der Kollision von Karosserien, die auf benachbarten festen Plattform 2 montiert sind, viel leichter ausgeschlossen werden können. Besonders wichtig ist aber, dass auf diese Weise in der Länge der Behandlungsstraße erheblich Platz gespart werden kann, was bei den Beiz-, Grundier- und Lackiervorgängen sowie beim anschließenden Trocknen wegen der notwendigen

Einhausungen und Abdichtungen gegenüber der Umgebung einen großen Vorteil mit sich bringt.

Natürlich ist die Erfindung nicht auf die dargestellten Ausführungsbeispiele beschränkt. So kann bei entsprechenden Randbedingungen die dargestellte Kinematik auch ortsfest verwendet werden, es ist dann die feste Plattform 2 tatsächlich eine feste oder drehbare Plattform. Eine derartige Ausbildung der Erfindung kann beispielsweise zum Umsetzen von Werkstücken am Ende einer Fertigungsstraße verwendet werden, es muss dazu nur die bewegliche Plattform 3 passende Greiforgane bzw. Halteorgane besitzen.

Die Schenkel 13, 18 der beweglichen Plattform 3 müssen nicht den dargestellten Winkel miteinander einschließen, die Fußpunkte der Stäbe auf der festen Plattform 2 müssen nicht die dargestellte fluchtende bzw. symmetrische Anordnung aufweisen, wesentlich ist, dass ein Tripelpunkt, sei er nun ein echter oder ein Pseudo-Tripelpunkt, ausgebildet ist, was bevorzugt auf der beweglichen Plattform 3 erfolgt, da dann die Gewinne bei der Rechenarbeit für die Bewegung der beweglichen Plattform gegenüber der festen Plattform im Vergleich zum Stand der Technik am Größten sind.

## Patentansprüche

1. Hubroboter mit einer festen Plattform und einem Objektträger und einem die beiden verbindenden Mechanismus, wobei der Mechanismus eine Parallelkinematik ist und der Objektträger ihre bewegliche Plattform (3) ist, und wobei die Parallelkinematik als Verbindungselemente Aktuatoren: Stäbe veränderlicher Länge oder Stäbe konstanter Länge mit veränderlicher Lage ihres Fußpunktes, gegebenenfalls teilweise passive Stäbe: Stäbe konstanter Länge mit fest auf der festen Plattform angeordneten Fußpunkten, und gegebenenfalls Zugmittel: Seile, Ketten, etc., aufweist, und wobei drei Verbindungselemente in Form eines Pseudo-Tripelpunktes (P3') an einem gemeinsamen Punkt einer der Plattformen, bevorzugt an der beweglichen Plattform (3) angreifen, wobei der Pseudo-Tripelpunkt einer der folgenden Definitionen genügt:
a) Es greift jedes der drei Verbindungselemente für sich nahe der Angriffspunkte der beiden anderen Verbindungselemente an der beweglichen Plattform an;
b) Es greifen zwei der Verbindungselemente nahe benachbart an der beweglichen Plattform an, das dritte Verbindungselement an einem der beiden Verbindungselemente nahe seines Angriffspunktes an der beweglichen Plattform;
c) Es greifen zwei der Verbindungselemente gemeinsam an einem Punkt der beweglichen Plattform an, das dritte Verbindungselement an einem der beiden Verbindungselemente nahe des Angriffspunktes an der beweglichen Plattform;
d) Es greift ein Verbindungselement an einem Punkt der beweglichen Plattform an, das zweite Verbindungselement an diesem Verbindungselement nahe dessen Angriffspunktes an der beweglichen Plattform und das dritte Verbindungselement am zweiten Verbindungselement nahe dessen Angriffspunktes am ersten Verbindungselement;
e) Es greift ein Verbindungselement an einem Punkt der beweglichen Plattform an, das zweite Verbindungselement an diesem Verbindungselement nahe dessen Angriffspunktes an der beweglichen Plattform und das dritte Verbindungselement am ersten Verbindungselement nahe des Angriffspunktes des zweiten Verbindungselements;
f) Es greifen alle drei Verbindungselemente an einem Punkt der beweglichen Plattform an,
**dadurch gekennzeichnet, dass** die Kinematik des Mechanismus zumindest ein im wesentlichen in einer Ebene liegendes Gelenkviereck (15, 16) mit einem im wesentlichen diagonal verlaufenden Stab (S15,S16) bildet, dass ein Schenkel (13, 18) des Gelenkvierecks an der beweglichen Plattform ausgebildet ist, dass ein Querstab (17) an der beweglichen Plattform (3) an einem bzw. nahe eines der Doppelpunkte des Gelenkviereckes angreift und den Pseudo-Tripelpunkt bildet, und dass die feste Plattform (2) als Fahrwerk ausgebildet ist.

2. Hubroboter nach Anspruch 1, **dadurch gekennzeichnet, dass** er zwei Gelenkvierecke (15, 16), die in zu einer Symmetrieebene symmetrisch verlaufenden, bevorzugt in zueinander parallelen, Ebenen liegen, aufweist.

3. Hubroboter nach Anspruch 1 oder 2, **dadurch gekennzeichnet, dass** der diagonal verlaufende Stab ein passiver Stab ist.

4. Hubroboter nach Anspruch 1 oder 2, **dadurch gekennzeichnet, dass** sowohl die Stäbe aller Gelenkvierecke (15, 16) als auch jeder diagonal verlaufende Stab als Aktuator ausgebildet sind.

5. Hubroboter nach Anspruch 1, **dadurch gekennzeichnet, dass** der Querstab (17) als Aktuator ausgebildet ist.

6. Hubroboter nach einem der Ansprüche 1 bis 5, **dadurch gekennzeichnet, dass** die an der beweglichen Plattform (3) ausgebildeten Schenkel (13, 18) der Gelenkvierecke (15, 16) windschief zueinander angeordnet sind, das heißt in Draufsicht auf die Ebenen der Gelenkvierecke einen von Null Grad und 180° verschiedenen Winkel zueinander aufweisen.

7. Hubroboter nach einem der Ansprüche 1 bis 6, **dadurch gekennzeichnet, dass** der größte Abstand zwischen den Angriffspunkten der den Pseudo-Tripelpunkt bildenden Verbindungselemente kleiner ist als 20 % der kürzesten Länge des kürzesten am Pseudo-Tripelpunkt angreifenden Verbindungselementes.

8. Hubroboter nach Anspruch 7, **dadurch gekennzeichnet, dass** der größte Abstand zwischen den Angriffspunkten der den Pseudo-Tripelpunkt bildenden Verbindungselemente kleiner ist als 10 % der kürzesten Länge des kürzesten am Pseudo-Tripelpunkt angreifenden Verbindungselementes.

## Claims

1. A lift robot with a fixed platform and an object carrier and a connective mechanism in between, where the mechanism is a parallel kinematics and the object carrier is its moving platform (3), while the connecting elements of the parallel kinematics comprises actuators: rods of variable length or rods of constant length with variable position of their base support points; if applicable, some passive rods: rods of constant length with base support points with invariable position of their base support points on the fixed platform; and, if applicable, pulling means: cables, chains, etc., where three connecting elements forming a pseudo-triple point (P3') act on a common point of one of the platforms, preferable on the moving platform (3), such that the pseudo-triple point satisfies one of the following definitions:
a) each of the three connecting elements acts separately on the moving platform near the attachment points of the other two connecting elements;
b) two of the connecting elements act on the moving platform close to each other, and the third connecting element is attached to one of the other two connecting elements close to its attachment point at the moving platform;
c) two of the connecting elements act on a common point at the moving platform, and the third connecting element acts on to one of the other two connecting elements close to its attachment point at the moving platform;
d) one connecting element acts on a point at the moving platform; and the second connecting element acts on the first connecting element close to its attachment point at the moving platform; and the third connecting element acts on the second connecting element close to its attachment point at the first connecting element;
e) one connecting element acts on a point at the moving platform; the second connecting element acts on the first connecting element close to its attachment point at the moving platform; and the third connecting element acts on the first connecting element close to the attachment point of the second connecting element;
f) all three connecting elements are attached to one point on the moving platform,
**characterized in that**
the kinematics of this mechanism comprises a four-bar linkage (15, 16), lying essentially within one plane, with an essentially diagonal rod (S15, S16); **in that** a leg (13, 18) of the four-bar linkage is part of to the moving platform, **in that** a traverse bar (17) acts on one or close to one of the double points of the four-bar linkage at the moving platform (3) constituting the pseudo-triple point, and **in that** the fixed platform is designed as a chassis.

2. A lift robot according to Claim 1, **characterized in that** it compromises two articulated four-bar linkages, which are symmetric with respect to symmetry plane, preferable lying in planes parallel to each other.

3. A lift robot according to Claim I or 2 **characterized in that** the diagonal rod is a passive rod.

4. A lift robot according to Claim 1 or 2 **characterized in that** all diagonal rods and the legs of all four-bar linkages (15, 16) are designed as actuators.

5. A lift robot according to Claim 1 **characterized in that** the traversal rod (17) is designed as actuator.

6. A lift robot according to any of the Claims 1-5 **characterized in that** the legs (13, 18) of the four-bar linkages (15, 16) constructed on the moving platform (3) are arranged skewed to each other, i.e., in a top view of the planes of the four-bar linkages, they are at angles with each other with an angle, which is different from Zero Degree and different from 180°.

7. A lift robot according to any of the Claims 1-6 **characterized in that** the maximum distance between the support points of the pseudo-triple-point building legs is less than 20% of the shortest length of the shortest connecting element which is attached to the pseudo-triple-point.

8. A lift robot according to Claim 7, **characterized in that** the maximum distance between the support points of the pseudo-triple-point building legs is less than 10% of the shortest length of the shortest connecting element which is attached to the pseudo-triple point.

## Revendications

1. Robot de levage comprenant une plate-forme fixe, un support d'objets et un mécanisme reliant ces deux éléments, ledit mécanisme étant un dispositif à cinématique parallèle, et ledit support d'objets constituant sa plate-forme mobile (3) ; ledit dispositif à cinématique parallèle comprenant, en tant qu'éléments de liaison, des pièces d'actionnement : tiges de longueur variable ou tiges de longueur constante dont la base occupe une position variable, le cas échéant, des tiges partiellement passives : tiges de longueur constante dont les bases sont implantées rigidement sur la plate-forme fixe et, le cas échéant, des moyens de traction : câbles, chaînes, etc. ; et trois éléments de liaison, revêtant la forme d'un pseudo-point triple (P3'), étant en prise avec un point commun de l'une des plates-formes, de préférence avec la plate-forme mobile (3), sachant que ledit pseudo-point triple satisfait à l'une des définitions suivantes :
a) chacun des trois éléments de liaison est par lui-même en prise, avec la plate-forme mobile, à proximité des points de venue en prise des deux autres éléments de liaison ;
b) deux, parmi lesdits éléments de liaison, sont en prise étroitement voisine avec la plate-forme mobile, le troisième élément de liaison étant en prise avec l'un desdits deux éléments de liaison à proximité de son point de venue en prise avec ladite plate-forme mobile ;
c) deux, parmi lesdits éléments de liaison, sont en prise commune avec un point de la plate-forme mobile, le troisième élément de liaison étant en prise avec l'un desdits deux éléments de liaison à proximité de son point de venue en prise avec ladite plate-forme mobile ;
d) un élément de liaison est en prise avec un point de la plate-forme mobile, le deuxième élément de liaison étant en prise avec cet élément de liaison à proximité du point de venue en prise de ce dernier avec ladite plate-forme mobile, et le troisième élément de liaison étant en prise avec ledit deuxième élément de liaison à proximité du point de venue en prise de ce dernier avec ledit premier élément de liaison ;
e) un élément de liaison est en prise avec un point de la plate-forme mobile, le deuxième élément de liaison étant en prise avec cet élément de liaison à proximité du point de venue en prise de ce dernier avec ladite plate-forme mobile, et le troisième élément de liaison étant en prise avec ledit premier élément de liaison à proximité du point de venue en prise de ce dernier avec ledit deuxième élément de liaison ;
f) les trois éléments de liaison sont tous en prise avec un point de la plate-forme mobile,
**caractérisé par le fait que** la cinématique du mécanisme forme au moins un quadrilatère articulé (15, 16) situé, pour l'essentiel, dans un plan et présentant une tige (S15, S16) s'étendant pour l'essentiel diagonalement ; **par le fait qu'**une tige transversale (17) est respectivement en prise avec la plate-forme mobile (3) en un point double, ou à proximité de l'un des points doubles dudit quadrilatère articulé, et forme le pseudo-point triple ; et **par le fait que** la plate-forme fixe (2) est réalisée sous la forme d'un châssis de roulement.

2. Robot de levage selon la revendication 1, **caractérisé par le fait qu'**il comporte deux quadrilatères articulés (15, 16) situés dans des plans s'étendant symétriquement par rapport à un plan de symétrie, de préférence avec parallélisme mutuel.

3. Robot de levage selon la revendication 1 ou 2, **caractérisé par le fait que** la tige s'étendant diagonalement est une tige passive.

4. Robot de levage selon la revendication 1 ou 2, **caractérisé par le fait qu'**à la fois les tiges de tous les quadrilatères articulés (15, 16), et chaque tige s'étendant diagonalement, sont de réalisation du type pièce d'actionnement.

5. Robot de levage selon la revendication 1, **caractérisé par le fait que** la tige transversale (17) est réalisée en tant que pièce d'actionnement.

6. Robot de levage selon l'une des revendications 1 à 5, **caractérisé par le fait que** les branches (13, 18) des quadrilatères articulés (15, 16), qui sont ménagées sur la plate-forme mobile (3), sont agencées de façon réciproquement déjetée, c'est-à-dire qu'elles décrivent mutuellement un angle différant de zéro degré et de 180 ° en observation par-dessus des plans desdits quadrilatères articulés.

7. Robot de levage selon l'une des revendications 1 à 6, **caractérisé par le fait que** la distance maximale, entre les points de venue en prise des éléments de liaison formant le pseudo-point triple, est inférieure à 20 % de la longueur minimale de l'élément de liaison le plus court venant en prise avec ledit pseudo-point triple.

8. Robot de levage selon la revendication 7, **caractérisé par le fait que** la distance maximale, entre les points de venue en prise des éléments de liaison formant le pseudo-point triple, est inférieure à 10 % de la longueur minimale de l'élément de liaison le plus court venant en prise avec ledit pseudo-point triple.
